Europäisches Patentamt

European Patent Office

Office européen des brevets

(19)

(11) Publication number: **0 162 264 B1**

(12) **EUROPEAN PATENT SPECIFICATION**

(45) Date of publication of patent specification: **10.07.91**   (51) Int. Cl.⁵: **C03B 23/02, C03B 35/20**

(21) Application number: **85104264.8**

(22) Date of filing: **09.04.85**

(54) **Glass support system for a windscreen bending mould.**

(30) Priority: **24.05.84 FI 842071**

(43) Date of publication of application:
**27.11.85 Bulletin 85/48**

(45) Publication of the grant of the patent:
**10.07.91 Bulletin 91/28**

(84) Designated Contracting States:
**AT CH DE FR GB IT LI SE**

(56) References cited:
**US-A- 2 702 445**
**US-A- 3 023 542**

(73) Proprietor: **TAMGLASS OY**
**Vehmaistenkatu 5**
**SF-33730 Tampere(FI)**

(72) Inventor: **Linnamaa, Lasse Otto Heikki**
**Hannulankatu 7 B 12**
**SF-33580 Tampere 58(FI)**

(74) Representative: **Patentanwälte Grünecker,**
**Kinkeldey, Stockmair & Partner**
**Maximilianstrasse 58**
**W-8000 München 22(DE)**

## Description

The present invention relates to a glass support system for a windscreen bending mould, said mould being provided with an arched shaping surface, a glass sheet softening by the action of heat bending in conformity thereto.

If the glass sheets to be bent are placed on a mould so as to be supported by the mould at their ends only, the sagging central region of sheets will be subjected to major stresses. Thus, long and thin glass sheets may break off before the glass has heated sufficiently to sustain major deflections without breaking. This hazard of glass sheet breakage exists all the time from placing the glass sheets on a mould until reaching a sufficient softening temperature, at which a glass sheet sustains major deflections without breaking.

It is prior known (e.g. US Patent publication 3 023 542) to prevent the shattering of long, thin glass sheets to be bent in a mould by fitting said mould with glass-carrying brackets extending above the lower sections of a shaping surface and losing their supporting ability above a certain temperature.

The prior art solutions have employed two metals having different expansion coefficients at a glass bending temperature for providing support members for said glass-carrying brackets. The mechanism is structurally inconvenient and requires strict accuracy, thus increasing the costs of a mould. In addition, if a bimetallic element is used to effect triggering from full support action to complete elimination of support, the triggering temperature must be selected very carefully in a manner that an excessively rigid glass sheet does not break off or an excessively soft glass sheet does not fall heavily against the shaping surfaces to leave marks or local deformations on the edges of a glass sheet. Even the glass-carrying brackets leave their marks on a glass sheet if the full bearing power is maintained as the glass softens.

An object of the invention is to provide a glass support system for a windscreen bending mould for eliminating the hazard of breaking the long, thin glass sheets to be bent in a mould by means of a simple-design apparatus without the above drawbacks.

This object is achieved by the invention as set out in claim 1.

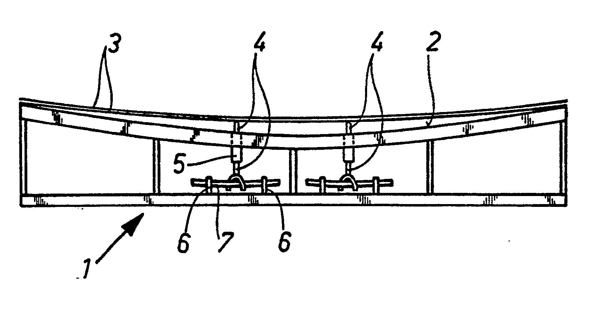

One embodiment of the invention will now be described with reference made to the accompanying drawing, showing a side view of a glass support system of the invention for a windscreen bending mould.

The bending mould may be a windscreen bending mould of any prior known type. The top surface of a bending mould 1 comprises an arched shaping surface 2, a glass sheet 3 softening through the application of heat and deflecting into conformity with said surface by the action of gravity. The general practice is to bend two glass sheets on top of each other.

According to the invention, a mould 1 is provided with glass-carrying brackets 4 extending above the lower sections of shaping surface 2, said brackets, in the present case, comprising upright rods guided in sleeves 5 mounted on the mould body. The lower ends of brackets 4 are designed to be fork-shaped or yoke-shaped for supporting them upon aluminium wires 7. On the other hand, the aluminium wires are mounted on supports 6 which are fixed relative to mould 1. The thickness of aluminium wires 7 is selected with respect to the distance of fixed supports 6 in a manner that said aluminium wires 7 do not deflect with permanent deformation or plastically under the weight of glass sheets 3 placed on the mould. Thus, long and thin glass sheets 3 can be placed on a mould and the mould carried into a heating furnace without the hazard of shattering said glass sheets 3.

As soon as glass sheets 3 together with their mould 1 are inside a heating furnace, the temperature of glass sheets 3 and aluminium wires 7 increases until the temperature is reached at which said aluminium wires 7 become soft and glass-carrying brackets 4 lose their bearing power. By this time, however, the temperature of glass sheets 3 has risen sufficiently for the glass sheets to sustain deflection without a hazard of breakage. As the temperature rises further to attain a final bending temperature, said aluminium wires 7 soften to such a degree that brackets 4 exert practically no counter-action at all against the deflection of glass sheets 3. In other words, the softening temperature of aluminium wires 7 is substantially below the temperature at which said glass sheets 3 finally bend into conformity with shaping surface 2. However, well before the attainment of the final bending temperature, the surface of glass sheets 3 has softened sufficiently for eliminating the build-up of breakage-causing major stresses in the surface.

It is obvious that the above embodiment is just an example and one possible approach for working the invention. Thus, an aluminium wire 7, and the way of supporting it, can be substituted with any means which is thermoplastic and thus loses its supporting power above a certain temperature. Hence, said glass-carrying brackets 4 can be fixed to the mould body e.g. with a thermoplastic adhesive. Also the number and disposition of glass-carrying brackets can be varied. What is essential is that the disappearance of the bearing power of a support system is based on the use of a single thermoplastic element, the release of glass-carrying power being achieved at a slow but controlled rate over a certain temperature range.

## Claims

1. A glass support system for a windscreen bending mould, said mould (1) being provided with an arched shaping surface (2) for deflecting a thermoplastic glass sheet (3) therealong, the breakage of long, thin glass sheets to be bent in the mould being prevented in that said mould (1) is provided with glass-carrying brackets (4) extending above the lower sections of said shaping surface (2) and losing their supporting power above a certain temperature, **characterized** in that said glass-carrying brackets (4) are supported on elements (7), which soften at said temperature and thus lose their supporting power.

2. A glass support system as set forth in claim 1, **characterized** in that said thermoplastic elements comprise aluminium wires (7).

3. A glass support system as set forth in claim 2, **characterized** in that said aluminium wire (7) is mounted by its ends on fixed supports (6) and said glass-carrying bracket (4) is carried by said aluminium wire (7) between said fixed supports (6).

4. A glass support system as set forth in any of claims 1-3, **characterized** in that said glass-carrying brackets (4) comprise upright rods, guided in sleeves (5) mounted on the mould body.

## Revendications

1. Système de support de verre pour un moule à bomber des pare-brises, ledit moule (1) étant pourvu d'une surface de formage cintrée (2), pour déformer une feuille de verre thermoplastique (3) à son contact, la rupture des feuilles de verre longues et minces qui doivent être bombées dans le moule étant empêchée par le fait que ledit moule (1) est pourvu de supports de maintien du verre (4), qui s'étendent au-dessus des sections inférieures de ladite surface de formage (2) et qui perdent leur action de support au-dessus d'une certaine température, caractérisé en ce que lesdits supports de maintien du verre (4) sont supportés sur des éléments (7) qui s'assouplissent à ladite température et perdent ainsi leur action de support.

2. Système de support selon la revendication 1, caractérisé en ce que lesdits éléments thermoplastiques comprennent des fils d'aluminium (7).

3. Système de support selon la revendication 2, caractérisé en ce que ledit fil d'aluminium (7) est monté par ses extrémités sur des supports fixes (6) et ledit support de maintien du verre (4) étant porté par ledit fil d'aluminium (7), entre lesdits supports fixes (6).

4. Système de support selon la revendication 1, caractérisé en ce que lesdits supports de maintien du verre (4) comprennent des tiges verticales guidées dans des douilles (5) montées dans le corps de moule.

## Ansprüche

1. Glas-Stützvorrichtung für eine Form zum Biegen von Windschutzscheiben, wobei die Form (1) mit einer gebogenen Formgebungsoberfläche (2) versehen ist, um entlang dieser eine thermoplastische Glastafel (3) abzulenken und der Bruch langer, dünner Glastafeln, die in der Form gebogen werden sollen, dadurch vermieden wird, daß die Form (1) mit Glasträgerstützen (4) versehen ist, die sich oberhalb der unteren Abschnitte der Formgebungoberfläche (2) erstrecken und ihre Stützkraft oberhalb einer bestimmten Temperatur verlieren, **dadurch gekennzeichnet**, daß die Glasträgerstützen (4) auf Elementen (7) gehaltert sind, die bei dieser Temperatur erweichen und so ihre Stützkraft verlieren.

2. Glas-Stützvorrichtung nach Anspruch 1, **dadurch gekennzeichnet**, daß die thermoplastischen Elemente Aluminiumdrähte (7) umfassen.

3. Glas-Stützvorrichtung nach Anspruch 2, **dadurch gekennzeichnet**, daß der Aluminiumdraht (7) mit seinen Enden auf fixierten Trägern (6) angebracht ist, und daß die Glasträgerstütze (4) durch den Aluminiumdraht (7) zwischen den fixierten Trägern (6) gehaltert ist.

4. Glas-Stützvorrichtung nach einem der Ansprüche 1 bis 3, **dadurch gekennzeichnet**, daß die Glasträgerstützen (4) aufrechte Stangen umfassen, die in Muffen (5) geführt sind, die auf dem Formgehäuse angebracht sind.